# EUROPÄISCHE PATENTANMELDUNG

(11) **EP 4 191 461 A1**
(43) Veröffentlichungstag der Anmeldung: **07.06.2023**
(21) Anmeldenummer: 21211880.6
(22) Anmeldetag: 02.12.2021
(51) Int. Cl.: G06F 30/13, G06F 30/27, G06F 111/06, G06F 111/20

(54) **COMPUTER-IMPLEMENTIERTES VERFAHREN ZUR PLATZIERUNG VON ELEMENTEN IN EINEM RAUM EINES GEBÄUDES**

(71) Anmelder: Siemens Schweiz AG, 8047 Zürich (CH)
(72) Erfinder: Die Erfindernennung liegt noch nicht vor
(74) Vertreter: Siemens Patent Attorneys

(57) **Zusammenfassung**

Computer-implementiertes Verfahren zur Platzierung von Elementen in einem Raum eines Gebäudes, wobei die Elemente jeweils einen Element-Arbeitsbereich aufweisen, und folgende Schritte ausgeführt werden:
a) Bereitstellen der Geometrie des Raums durch ein Raum-Modell,
b) Bestimmen einer Menge von möglichen Element-Positionen zur Platzierung der Elemente aus dem Raum-Modell unter Berücksichtigung von vorbestimmten Platzierungs-Regeln für den Raum,
c) Ermitteln der Anzahl an Elementen für den Raum mithilfe eines Modells auf Basis maschinellen Lernens,
d) Bestimmen einer Menge an Element-Anordnungen mit Permutationen für die Anzahl an Elementen an den möglichen Element-Positionen, jeweils durch:
d1) Festlegen von Element-Orten an den möglichen Element-Positionen für die ermittelte Anzahl an Elementen unter Berücksichtigung von vorbestimmten Platzierungs-Regeln für die Elemente als Element-Anordnung,
d2) Ermitteln eines aggregierten Gesamt-Element-Arbeitsbereichs für den Raum mithilfe der Element-Anordnung und den jeweiligen Element-Arbeitsbereichen,
e) Bestimmen der Element-Anordnung mit dem niedrigsten Verhältnis von Anzahl an Elementen für den Raum und Gesamt-Element-Arbeitsbereich aus der ermittelten Menge an Element-Anordnungen.

## Beschreibung

Die Erfindung betrifft ein computer-implementiertes Verfahren und eine Vorrichtung zur Platzierung von Elementen in einem Raum eines Gebäudes, wobei die Elemente jeweils einen Element-Arbeitsbereich aufweisen.

Ferner betrifft die Erfindung ein Computerprogramm, einen elektronisch lesbaren Datenträger und ein Datenträgersignal.

Bei der Errichtung von Gebäuden ist es oft notwendig Brandmelde-Systeme, Sprinkler-Anlagen, Drahtlos-Funknetze, Heizungsanlagen oder Lüftungsanlagen innerhalb einzelner Räume zu dimensionieren und zu realisieren.

Aus mehreren entsprechenden Elementen kann ein System geschaffen werden, wobei die Komplexität und die Kosten erheblich durch ein entsprechendes Planungsverfahren beeinflusst werden.

Bisher wurden solche Anlagen häufig manuell dimensioniert, wobei auf erfahrene Ingenieure zurückgegriffen wurde oder parametrische Berechnungen durchgeführt wurde, welche jedoch enorm komplex werden können.

Im Stand der Technik wird beispielsweise einfach von einer durchschnittlichen Element-Anzahl je Raum-Quadratmeter ausgegangen, um eine Detail-Planung durchzuführen, was jedoch nicht immer zu einer optimalen Systemauslegung führt.

Dabei ist eine aufwändige und daher eher unerwünschte Verifikation erforderlich, insbesondere bei der Ermittlung von Arbeitsbereichen der positionierten Elemente.

Es besteht daher der Wunsch, eine automatisierte Lösung dieser Positionierungsaufgabe bereitzustellen, um eine optimale Platzierung von Elementen in einem Raum zu erreichen, und so eine bessere, schnellere und kostengünstigere Durchführung der Positionierung zu ermöglichen und ferner ein digitales Modell der positionierten Elemente zu schaffen.

Es ist daher Aufgabe der Erfindung, diesem Wunsch zu entsprechen.

Die erfindungsgemäße Aufgabe wird durch ein computer-implementiertes Verfahren eingangs genannter Art gelöst, bei dem folgende Schritte ausgeführt werden:
a) Bereitstellen der Geometrie des Raums durch ein Raum-Modell,
b) Bestimmen einer Menge von möglichen Element-Positionen zur Platzierung der Elemente aus dem Raum-Modell unter Berücksichtigung von vorbestimmten Platzierungs-Regeln für den Raum,
c) Ermitteln der Anzahl an Elementen für den Raum mithilfe eines Modells auf Basis maschinellen Lernens,
d) Bestimmen einer Menge an Element-Anordnungen mit Permutationen für die Anzahl an Elementen an den möglichen Element-Positionen, jeweils durch:
   d1) Festlegen von Element-Orten an den möglichen Element-Positionen für die ermittelte Anzahl an Elementen unter Berücksichtigung von vorbestimmten Platzierungs-Regeln für die Elemente als Element-Anordnung,
   d2) Ermitteln eines aggregierten Gesamt-Element-Arbeitsbereichs für den Raum mithilfe der Element-Anordnung und den jeweiligen Element-Arbeitsbereichen,
e) Bestimmen der Element-Anordnung mit dem niedrigsten Verhältnis von Anzahl an Elementen für den Raum und Gesamt-Element-Arbeitsbereich aus der ermittelten Menge an Element-Anordnungen.

Dadurch kann die Dimensionierung von Anlagen mit verbundenen, verteilten System-Elementen in Räumen schon in der Planungsphase ermöglicht werden, wodurch ferner Probleme frühzeitig erkannt und behoben werden können.

Diese Fähigkeit führt zu kürzeren Planungsprozessen, einfacheren und kostengünstigeren Design-Anpassungen und Materialeinsparungen durch leistungsfähigere Lösungen.

Darüber hinaus liefern die während des Entwurfsprozesses gesammelten Daten wertvolle Informationen über Gebäude und helfen bei der Integration von weiteren Systemen und Anlagen mithilfe von digitalen Gebäude-Daten (engl. "Building Information Modeling", BIM).

Die Elemente in einem Raum bilden ein gemeinsames System, bei welchem die Arbeitsbereiche einzelner Elemente mithilfe der gewählten Positionen im Raum zu einem gesamten Arbeitsbereich aller Elemente im Raum des Gebäudes aggregiert werden.

Die Anzahl an Elementen für den Raum wird mithilfe eines Modells auf Basis maschinellen Lernens ermittelt, um einen möglichst großen Arbeitsbereich, das heiß einen Abdeckungsbereich für die Wirkung eines einzelnen Elements bereitzustellen, beispielsweise ein Empfangsbereich für einen Sensor.

Die Elemente sind vorzugsweise Elemente eines Überwachungssystems, da ein Überwachungssystem auf die erfindungsgemäße Weise besonders einfach dimensioniert werden kann, denn es muss zur Bestimmung des jeweiligen Arbeitsbereichs lediglich eine Einflussgröße hin zum Element berücksichtigte werden und nicht ein bidirektionaler Einfluss bei bidirektionalen Elementen, also sendenden und empfangenden Elementen wie Funk-Kommunikationsmodule, bei welchen Reflexionsverhalten durch abgehenden Signale berücksichtigt werden müssen, was wiederum einen hohen Aufwand bedeutet.

Der Arbeitsbereich eines unidirektionalen Elements ist beispielsweise der Sensor-Empfangsbereich eines Brandmelder-Elements.

Der Arbeitsbereich eines bidirektionalen Elements ist beispielsweise der Sende-/Empfangsbereich eines WLAN-Funk-Kommunikationsmoduls oder Funk-Bus-Systems.

Unter einem aggregierten Gesamt-Element-Arbeitsbereich versteht man im vorliegenden Zusammenhang eine Superposition, das heißt Aufsummierung einzelner Element-Arbeitsbereiche, also ein additiv sich ergebender Bereich im Raum, welcher sich aus den beteiligten Einzel-Bereichen zusammensetzt.

Unter Element-Orten wird eine gewählte örtliche Position eines Elements im Raum verstanden, also beispielsweise an Koordinaten im Raum.

Die Menge an Element-Anordnungen wird durch Permutationen der Elemente in der ermittelten Anzahl an den möglichen Element-Positionen, welche im Schritt b) bestimmt wurden, festgelegt.

Durch die Erfindung ist es möglich, durch eine intelligente Vorauswahl der Anzahl an Elementen, eine Reduktion von möglichen Permutationen zu erreichen, wodurch der Berechnungsaufwand im Vergleich zu einer reinen Parametrisierung erheblich verringert werden kann und somit die optimale Anordnung auf eine besonders effiziente Weise erfolgt.

Die optimale Element-Anordnung wird im vorliegenden Zusammenhang durch ein besonders günstiges, niedriges Verhältnis zwischen der Anzahl an Elementen und dem erhaltenen aggregierten Gesamt-Element-Arbeitsbereich für den Raum erhalten, also um einen möglichst großen Gesamt-Element-Arbeitsbereich je Element unter Berücksichtigung von vorbestimmten Platzierungs-Regeln für den Raum zu erreichen.

Mit anderen Worten soll für eine optimale Anordnung mit möglichst wenig Elementen ein möglichst hoher Gesamt-Element-Arbeitsbereich unter Einhaltung von regulativen Erfordernissen erreicht werden, jedoch unter Berücksichtigung von vorbestimmten Platzierungs-Regeln für den Raum gemäß Schritt b).

Durch die günstige und gezielte Auswahl von Kriterien kann die optimale Lösung für Element-Platzierungen gefunden werden.

Diese Kriterien können möglichen Ziel- oder Systemparametern entsprechen, wie eine optimale Leitungslänge für eine günstige Latenz, eine einfache Installation für eine geringe Systemkomplexität, spezielle Erfordernisse an die Verkabelung aus regulatorischer Sicht, eine redundante Systemauslegung für hohe Sicherheitserfordernisse oder eben eine gewählte Anzahl an Elementen für den Raum für ein effizientes System in Kombination mit einem möglichst weitreichenden aggregierten Gesamt-Element-Arbeitsbereich der einzelnen Elemente für den Raum, also eine möglichst geringe abschattete Fläche im gesamten Arbeitsbereich.

Die gezielte Auswahl von Kriterien erfolgt unter anderem durch den Schritt b) mittels Berücksichtigung von vorbestimmten Platzierungs-Regeln für den Raum.

Die Vorauswahl erfolgt durch einen Ähnlichkeitsvergleich mit ähnlichen Räumen unter Verwendung von maschinellem Lernen und deren Erkenntnisse über eine erreichbare Abdeckung beziehungsweise einen entsprechenden Arbeitsbereich durch die daraus abgeleitete Anzahl von Elementen.

Dieser Aspekt führt zu einer verbesserten Ausgangslage in der Planung und somit zu einer optimierten Element-Platzierung.

In einer Weiterbildung der Erfindung ist es vorgesehen, dass ferner folgender Schritt ausgeführt wird:
f) Platzieren der Elemente an den Positionen der im Schritt e) bestimmten Element-Anordnung.

Es kann außerdem oder alternativ ein entsprechendes digitales Raum- beziehungsweise Gebäude-Modell erzeugt werden, welche die ermittelte optimale Element-Anordnung umfasst.

In einer Weiterbildung der Erfindung ist es vorgesehen, dass die Elemente Sensoren wie Brandmelder sind, und die Elemente vorzugsweise Elemente eines Überwachungssystems sind.

Dadurch ist das Verfahren besonders einfach anwendbar.

In einer Weiterbildung der Erfindung ist es vorgesehen, dass die Elemente Aktuatoren wie Heizungsregler oder aufnehmende Einheiten wie Zuluft-Einheiten oder abgebende Einheiten wie Abluft-Einheiten umfassen.

Dabei ist der Arbeitsbereich eines Elements beispielsweise der Aktionsradius eines Lüfter-Elements.

In einer Weiterbildung der Erfindung ist es vorgesehen, dass die Elemente Emitter für Löschwasser, also Sprinkler, oder Funk, wie Drahtlos-Funk-Kommunikationsmodule, umfassen.

Der Arbeitsbereich eines unidirektionalen Elements ist beispielsweise der Löschbereich eines Sprinkler-Elements.

Sowohl Brandmelder als auch Alarmblitzleuchten, welche Emitter sind, können über eine gemeinsame Leitung mit einer Brandmeldezentrale verbunden sein.

In einer Weiterbildung der Erfindung ist es vorgesehen, dass das Modell auf Basis maschinellen Lernens mithilfe von Referenz-Räumen mit installierten Referenz-Elementen erzeugt und trainiert wird, und bei welchem Modell jeweils die Geometrie eines Referenz-Raums mit Referent-Elementen und ein entsprechender aggregierter Gesamt-Arbeitsbereich für die Referenz-Elemente berücksichtigt wird.

Dabei ist es besonders günstig, wenn ein genetischer Algorithmus bei der Erzeugung und beim Trainieren für das Modell auf Basis maschinellen Lernens angewandt wird, das heißt das Modell auf Basis maschinellen Lernens durch einen genetischen Algorithmus bestimmt ist.

Evolutionäre Algorithmen - oder auch genetische Algorithmen - sind eine Form der Entwicklung von Künstlicher Intelligenz. Genauer gesagt ist es eine Form von Deep Learning, was wiederum ein Teilbereich von "Machine Learning" (ML) darstellt. Evolutionäre Algorithmen orientieren sich an der biologischen Evolution und dessen Entwicklungsmuster.

Durch die günstige und gezielte Auswahl von drei Kriterien kann auf besonders einfache Weise die optimale Lösung für Element-Platzierungen gefunden werden.

Ein zweifaches Kriterium liegt in der günstigen Wahl aus mehreren möglichen Ziel- oder Systemparametern, wie eine optimale Leitungslänge für eine günstige Latenz, eine einfache Installation für eine geringe Systemkomplexität, spezielle Erfordernisse an die Verkabelung aus regulatorischer Sicht, eine redundante Systemauslegung für hohe Sicherheitserfordernisse oder eben eine gewählte Anzahl an Elementen für den Raum für ein effizientes System in Kombination mit einem möglichst weitreichenden aggregierten Gesamt-Element-Arbeitsbereich der einzelnen Elemente für den Raum, also eine möglichst geringe abschattete Fläche im gesamten Arbeitsbereich.

Ein weiteres Kriterium liegt in der günstigen Wahl eines besonders vorteilhaften Algorithmus auf Basis maschinellen Lernens, wie die Anwendung genetischer Algorithmen.

Dadurch wird auf besonders effiziente Weise bereits erhobenes Expertenwissen eingesetzt, um ähnliche Eigenschaften für Räume und Elemente zu nutzen, und für den zu untersuchenden Raum anzuwenden.

Diese ähnlichen Eigenschaften für Räume beziehen sich beispielsweise auf Geometrien und Gebäude-Strukturen, sowie die Anzahl von Elementen und deren individuelle und gemeinsamen Abdeckungsbereiche.

Daher ist es in einer Weiterbildung der Erfindung vorgesehen, dass die vorbestimmten Platzierungs-Regeln für den Raum Mindest-Abstände zu Wänden oder Raum-Öffnungen, oder ein vordefiniertes Positions-Raster für mögliche Element-Positionen im Raum umfassen.

In einer Weiterbildung der Erfindung ist es ferner vorgesehen, dass die vorbestimmten Platzierungs-Regeln für die Elemente Höchst-Abstände zwischen einzelnen Elementen oder bevorzugte Installations-Positionen umfassen.

Die erfindungsgemäße Aufgabe wird auch durch eine Vorrichtung eingangs genannter Art gelöst und das erfindungsgemäße Verfahren ausgeführt wird.

Die erfindungsgemäße Aufgabe wird auch durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird auch durch einen elektronisch lesbaren Datenträger mit darauf gespeicherten lesbaren Steuerinformationen gelöst, welche zumindest das Computerprogramm nach dem vorhergehenden Anspruch umfassen und derart ausgestaltet sind, dass sie bei Verwendung des Datenträgers in einer Recheneinrichtung das erfindungsgemäße Verfahren durchführen.

Die erfindungsgemäße Aufgabe wird auch durch ein Datenträgersignal, welches das erfindungsgemäße Computerprogramm überträgt.

Die Erfindung wird nachfolgend anhand eines in den beigeschlossenen Zeichnungen dargestellten Ausführungsbeispiels näher erläutert. In den Zeichnungen zeigt:
- Fig. 1: schematisch ein Ausführungsbeispiel des erfindungsgemäßen Verfahrens,
- Fig. 2: ein Flussdiagramm des erfindungsgemäßen Verfahrens,
- Fig. 3: ein Beispiel für ein Raum-Modell,
- Fig. 4: eine Ansicht des Raum-Modells nach Fig. 3 von oben,
- Fig. 5: eine gedrehte Ansicht der Fig. 4,
- Fig. 6: die Ansicht nach Fig. 5 mit einem Raster,
- Fig. 7: die Ansicht nach Fig. 6 nach Anwendung von Platzierungs-Regeln für den Raum,
- Fig. 8: die Ansicht des Raums nach Fig. 3 mit automatisch ermittelten Sensor-Positionen,
- Fig. 9: ein Vergleich von manuell ermittelten Sensor-Positionen mit erfindungsgemäß ermittelten Sensor-Positionen.

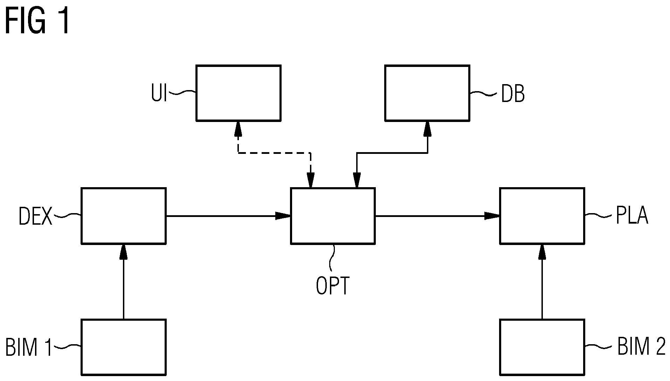

**Fig. 1** zeigt schematisch ein Ausführungsbeispiel des erfindungsgemäßen Verfahrens zur Platzierung von Elementen in einem Raum R eines Gebäudes B.

Das Verfahren ist in einer Rechenvorrichtung mit einem Speicher computer-implementiert.

Der Raum kann Teil eines Gebäudes sein.

Als Elemente für eine optimale Platzierung können Sensoren wie Brandmelder verwendet werden, wobei die Brandmelder-Sensoren jeweils einen Bereich in deren jeweiligen Umgebung aufweisen, in welchem beispielsweise Rauch, Ruß oder Staub eines Brandes erkannt wird.

Die Elemente weisen jeweils einen Element-Arbeitsbereich, das heißt einen Erfassungsbereich auf, in welchem das Element mit der Umgebung interagieren kann.

Das erfindungsgemäße Verfahren kann beispielweise auch auf Aktuatoren wie Heizungsregler angewandt werden, sowie auf aufnehmende Einheiten wie Zuluft-Einheiten oder abgebende Einheiten wie Abluft-Einheiten.

Das erfindungsgemäße Verfahren kann beispielweise auch auf die optimale Positionierung von Drahtlos-Netzwerke, wie WLANs, Bluetooth-Mesh-Netzwerke oder drahtlose Elektro-Installations-Netze nach dem Zigbee-, Funk-KNX-, Z-Wave-, EnOcean-Standard oder für andere proprietäre Systeme angewandt werden.

Ferner kann das erfindungsgemäße Verfahren auch bei der Planung von drahtgebundenen Kommunikationssystemen angewandt werden, beispielswiese bei der Planung von Zugangspunkten wie für LAN-Switches, aber auch für Steckdosen für die Stromversorgung.

Ebenso kann das erfindungsgemäße Verfahren in anderen Systemen der Gebäudeautomation, Gebäudesystemtechnik oder Gebäudekommunikation angewandt werden.

Das Verfahren wird in diesem Beispiel angewandt, um eine optimale Brandmelder-Anordnung für einen Raum zu ermitteln.

Die Optimale Anordnung bezieht sich dabei auf ein optimales Verhältnis zwischen einer minimalen Anzahl von Brandmelder-Elementen und einem maximalen Sensor-Erfassungsbereich der Brandmelder insgesamt.

Zunächst werden Raum-Daten in Form eines ersten BIM-Modell BIM1 erfasst. Ein BIM-Modell besteht aus Daten, die in der Regel durch ein Informationsmodell für die digitale Gebäudemodellierung strukturiert werden, das neben geometrischen auch alphanumerische Daten verwalten kann. Mit Hilfe eines BIM-Modells soll das spätere Gebäude mit allen Aspekten als "digitaler Zwilling" rechnergestützt abgebildet werden.

Die Industry Foundation Classes (IFC) sind ein offener Standard im Bauwesen zur digitalen Beschreibung von Gebäudemodellen (Building Information Modeling). Definiert werden die IFC von buildingSMART International (bSI), früher bekannt als Industrieallianz für Interoperabilität (IAI). Registriert sind die IFC unter ISO-16739.

Abgebildet werden die logischen Gebäudestrukturen (z. B. Fenster-Öffnung-Wand-Geschoss-Gebäude), die zugehörigen Eigenschaften (Attribute) und die optionale Geometrie. Es lassen sich damit u.a. komplexe 3D-Planungsdaten mit den Bauelementen und beschreibenden Attributen zwischen Bausoftwaresystemen übertragen. IFC wird von zahlreicher Software zum Austausch von Gebäudedaten unterstützt.

Anwendungsbereiche sind z. B. 2D/3D-CAD, Statik- und Energieberechnungen, Mengen- und Kostenermittlung sowie im Facility-Management. Der Austausch erfolgt durch IFC-Dateien mit der Endung *.ifc. Daneben sind auch IFC-Dateien im XML-Standard (*.ifcXML) und gezipte IFC-Dateien (*.ifcZIP) gebräuchlich. buildingSMART unterhält eine Datenbank mit allen Programmen, die nach eigener Auskunft IFC unterstützen: IFC-Softwaredatenbank.
buildingSMART bietet darüber hinaus allen Softwareherstellern, die ihre IFC-Schnittstelle einer unabhängigen Qualitätsprüfung unterziehen wollen, ein Zertifizierungsprogramm an.

Dann erfolgt eine Daten-Extraktion DEX, bei welcher beispielsweise die Geometrie des Raumes und Raum-Elemente, wie neben den Wänden auch Öffnungen wie Türen oder Fenster oder andere Gebäude-Strukturelemente wie Säulen ermittelt werden, wobei ein BIM-Modell des Raumes erzeugt wird.

Die Erstellung eines Raum-Modells kann beispielsweise händisch basierend auf Plänen und CAD-Zeichnungen erfolgen.

Ebenso kann mithilfe eines NavVis-Scans eine Punktewolke erstellt beziehungsweise gesammelt werden, welche in ein Raum-Modell abgebildet wird.

Ein derart erfasstes BIM-Modell kann dem erfindungsgemäßen Verfahren im Schritt a) bereitgestellt werden.

Aus dem IFC-Modell können definierte Objekte und ihre Geometrie abgeleitet werden.

Dann erfolgt im Schritt OPT die Bestimmung der optimalen Brandmelder-Anordnung, welche in der nachfolgenden Figur detailliert erläutert wird.

Eine vorteilhafte Voraussetzung für den erfolgreichen Einsatz eines Optimierungsalgorithmus, wie im vorliegenden Beispiel des "Multi-objective Genetic Algorithm", ist die mathematischen Formulierung der Optimierungs-Aufgabe.

Ferner werden beispielsweise durch technische Richtlinien und Standards hinsichtlich Bautechnik oder vorbeugendem Brandschutz vorbestimmte Platzierungs-Regeln für die Elemente ermittelt, wie beispielsweise Höchst-Abstände zwischen einzelnen Brandmelder-Elementen oder bevorzugte Installations-Positionen der Brandmelder, und auf das zuvor erzeugt BIM-Modell des Raumes angewandt, das heißt in eine für Maschinen lesbare Form gebracht.

Ein Benutzer-Interface UI erlaubt während der Optimierung OPT eine Eingabe von Parametern. Alternativ kann auch auf vorbestimmte Parameter beispielweise aus Datenbank DB einer zurückgegriffen werden.

Abschließend erfolgt im Schritt PLA die Platzierung gemäß der zuvor ermittelten Anordnung, für welche ein entsprechendes BIM-Modell BIM2 des Raumes erzeugt wird, welches neben Gebäude-Informationen nun auch Informationen über die Brandmelder-Installation aufweist.

Auf diese Weise können auch weitere Installationen, wie für Heizung, Lüftung, Drahtlos-Netzwerk oder Elektro-Installation im BIM-Modell berücksichtigt werden.

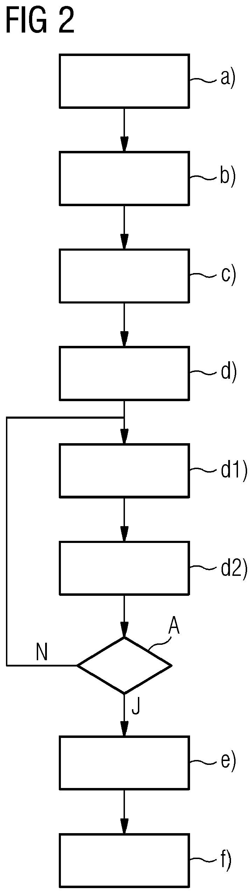

**Fig. 2** zeigt ein Flussdiagramm des erfindungsgemäßen Verfahrens, welches von einer entsprechenden Rechenvorrichtung mit einem Speicher ausgeführt wird.

Als Ergebnis des Verfahrens kann nach dem Schritt e) ein BIM-Modell mit den ermittelten optimalen Positionen erzeugt werden, welches beispielsweise für eine Fehleranalyse bereits in der Planungsphase verwendet werden kann.

Natürlich kann ein ermittelter Datensatz auch für das Training eines ML-Modells verwendet werden.

Folgende Schritte werden dabei ausgeführt werden:
a) Bereitstellen der Geometrie des Raums R durch ein Raum-Modell BIM1,
b) Bestimmen einer Menge von möglichen Element-Positionen zur Platzierung der Elemente aus dem Raum-Modell unter Berücksichtigung von vorbestimmten Platzierungs-Regeln für den Raum R,
c) Ermitteln der Anzahl an Elementen für den Raum mithilfe eines Modells auf Basis maschinellen Lernens,
d) Bestimmen einer Menge an Element-Anordnungen mit Permutationen für die im Schritt c) ermittelte Anzahl an Elementen an den möglichen Element-Positionen, jeweils durch:
   d1) Festlegen von Element-Orten an den möglichen Element-Positionen für die ermittelte Anzahl an Elementen unter Berücksichtigung von vorbestimmten Platzierungs-Regeln für die Elemente als Element-Anordnung,
   d2) Ermitteln eines aggregierten Gesamt-Element-Arbeitsbereichs für den Raum mithilfe der Element-Anordnung und den jeweiligen Element-Arbeitsbereichen,
e) Bestimmen der Element-Anordnung E1-E3 mit dem niedrigsten Verhältnis von Anzahl an Elementen E1-E3 für den Raum R und Gesamt-Element-Arbeitsbereich aus der ermittelten Menge an Element-Anordnungen,
f) Platzieren der Elemente an den Positionen E1-E3 der im Schritt e) bestimmten Element-Anordnung im Raum R.

Dabei wird das Modell auf Basis maschinellen Lernens mithilfe einer Vielzahl an Referenz-Räumen mit installierten Referenz-Elementen erzeugt und trainiert.

Dies geschieht beispielsweise mit einem Multi-objective Genetic Algorithm wie er in Holland, John H. "Generic Algorithms." Scientific American, 1992: 66-73 beschrieben ist.

Alternativ ist auch die Anwendung eines anderen "Deep Neural Network" möglich.

Das Modell berücksichtigt jeweils die Geometrie eines Referenz-Raums mit der verwendeten Anzahl an Referent-Elementen.

Ferner umfasst das Modell jeweils einen aggregierten Gesamt-Arbeitsbereich für den jeweiligen Raum mit den Referenz-Elementen.

Nach den Schritten d1) und d2) erfolgt eine Abfrage A, ob die Element-Anordnungen bereits für alle Permutationen ermittelt wurden.

Falls dies noch nicht zutrifft, Zwei N, werden die Schritten d1) und d2) wiederholt.

Anderenfalls, im Zweig Y, wird mit dem Schritt e) fortgefahren.

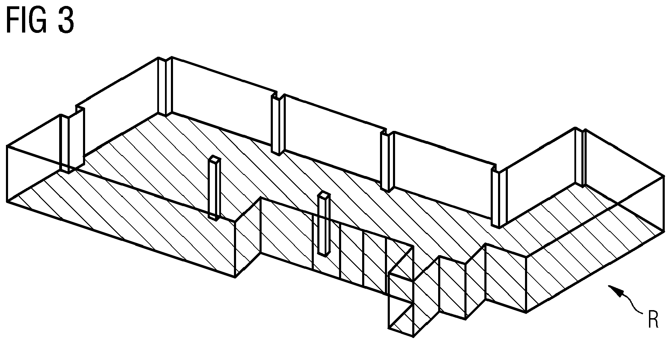

**Fig. 3** stellt eine räumliche Ansicht für ein Beispiel für ein Raum-Modell des Raumes R dar.

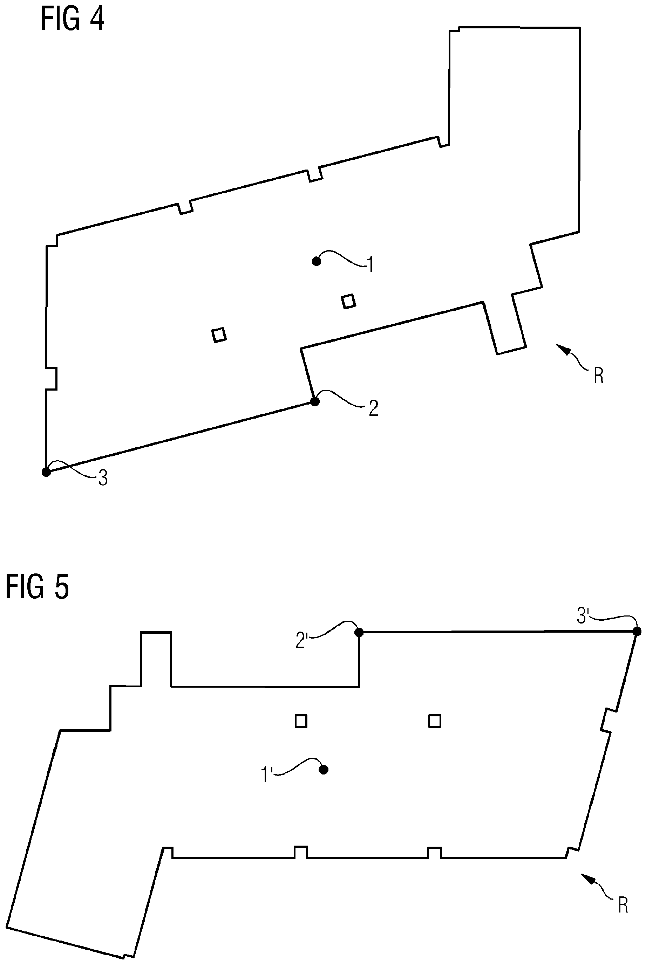

**Fig. 4** zeigt eine Ansicht des Raum-Modells nach Fig. 3 von oben.

Es liegt eine komplexe Geometrie des Raumes R mit zwei Säulen in der Raummitte vor.

Es sind drei Punkte 1-3 für den Raum R eingezeichnet, um das Koordinatensystem zu kennzeichnen.

**Fig. 5** zeigt eine gedrehte Ansicht der Fig. 4, wobei die drei Punkte 1-3 durch eine Drehung in ein, für die anschließende Optimierung vorteilhaftes Koordinatensystem transformiert wurden, nämlich in die drei Punkte 1'-3'.

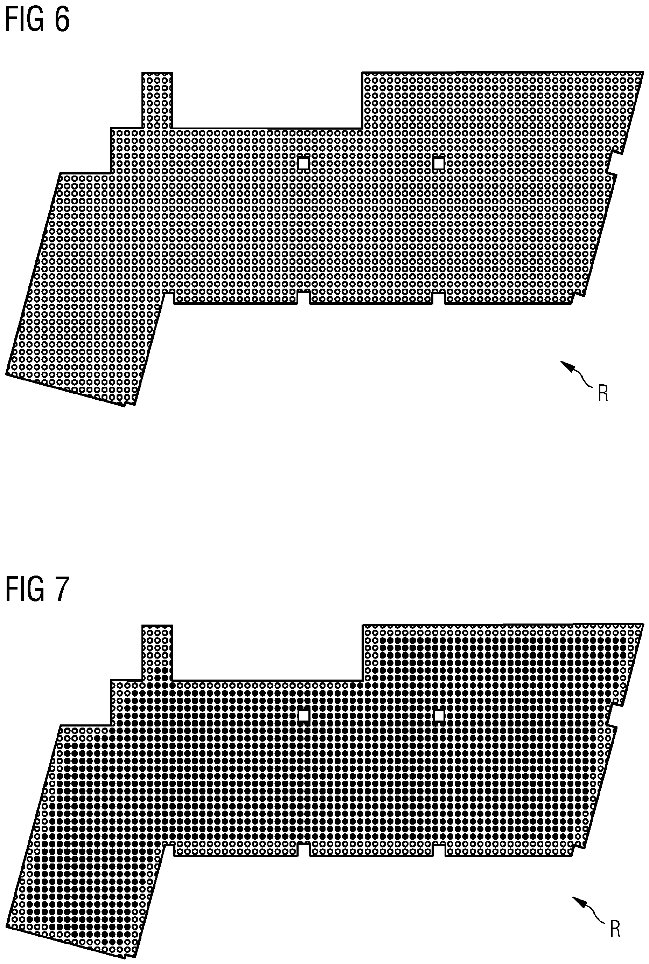

**Fig. 6** die Ansicht nach Fig. 5, wobei einem Raster für zulässige Element-Positionen erzeugt wird, um die Optimierung zu vereinfachen und beispielsweise einen Mindest-Abstand zwischen einzelnen Elementen vorzusehen.

Dies erfolgt mithilfe von vorbestimmten Platzierungs-Regeln für die Elemente, um beispielsweise Höchst-Abstände zwischen einzelnen Elementen zur bevorzugten lückenlosen Einhaltung eines Sensor-Erfassungsbereichs oder bevorzugte Installations-Positionen zu berücksichtigen.

**Fig. 7** stellt die zulässigen Element-Positionen nach Anwendung von Platzierungs-Regeln für den Raum dar.

Beispielsweise werden dabei Mindest-Abstände zu Wänden oder Raum-Öffnungen berücksichtigt.

Ferner können dadurch auch bevorzugte Installations-Positionen vorgesehen werden, um beispielsweise einen geraden Verlauf von Installationsleitungen sicherzustellen.

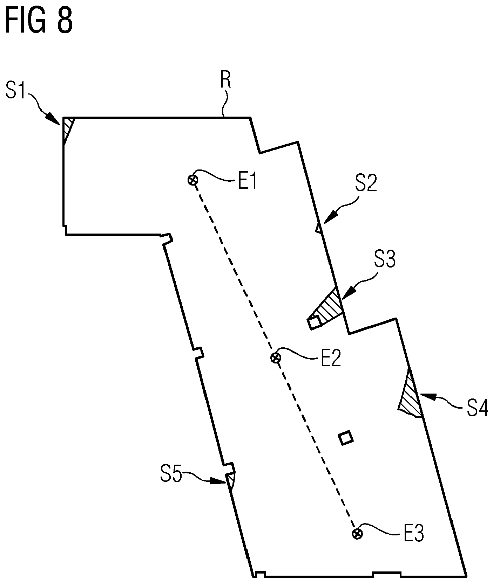

**Fig. 8** die Ansicht des Raums R mit automatisch ermittelten Sensor-Positionen.

Es ist erkennbar, dass mit drei Brandmeldern E1-E3 ein sehr guter Erfassungsbereich für den Raum R erreicht wird, da Abschattungsbereiche S1-S5 nur ein sehr geringes Ausmaß erreichen.

Die Sensoren E1-E3 liegen entlang einer Geraden und lassen sich einfach und kostengünstig installieren.

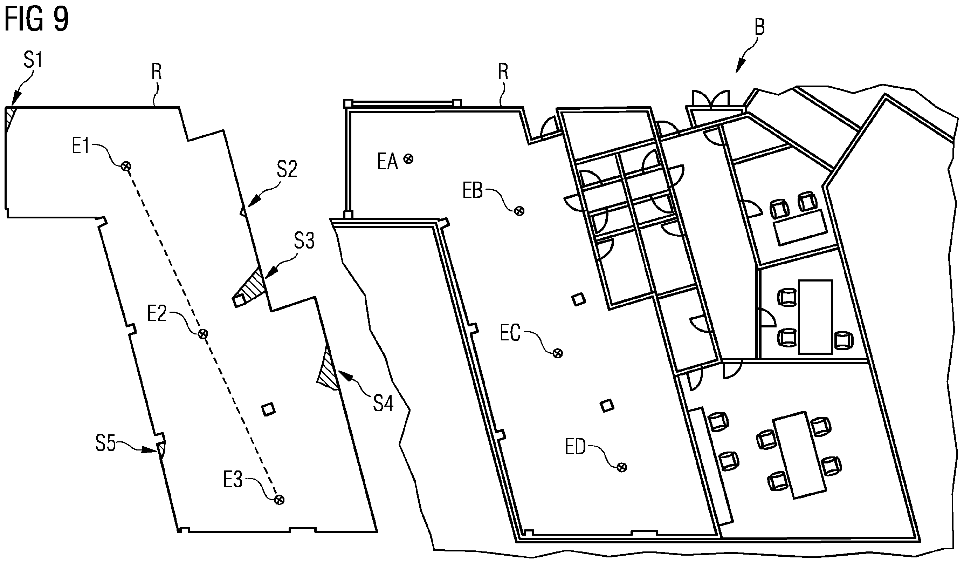

In **Fig. 9** ist ein Vergleich von manuell ermittelten Sensor-Positionen EA-ED mit erfindungsgemäß ermittelten Sensor-Positionen E1-E3 für den Raum R im Gebäude B dargestellt.

Die Anordnung mit den Sensoren E1-E3 benötigt drei Sensoren für einen sehr guten Erfassungsbereich.

Die Anordnung mit den Sensoren EA-ED benötigt jedoch vier Sensoren für einen vergleichbaren Erfassungsbereich.

Ferner ist die Anordnung mit den Sensoren EA-ED komplexer in deren Errichtung, da eine deutlich umständliche Installation gemäß anzuwendender Installationsvorschriften und Normen vonnöten ist.

### Bezugszeichenliste:

- 1'-3': Gedrehte Raum-Koordinaten
- 1-3: Raum-Koordinaten
- a)-f): Verfahrensschritte
- A: Abfrage, ob Element-Anordnungen für alle Permutationen ermittelt wurden
- B: Gebäude
- BIM1, BIM2: BIM-Modell
- DB: Datenbank
- DEX: Daten-Extraktion
- E1-E3: Automatische Sensor-Position
- EA-ED: Manuelle Sensor-Position
- N: Nein
- OPT: Optimierung
- PLA: Platzierung
- R: Raum
- S1-S5: abgeschatteter Bereich
- UI: Benutzer-Interface
- Y: Ja

## Patentansprüche

1. Computer-implementiertes Verfahren zur Platzierung von Elementen (E1-E3) in einem Raum (R) eines Gebäudes (B), wobei die Elemente (E1-E3) jeweils einen Element-Arbeitsbereich aufweisen, und folgende Schritte ausgeführt werden:
a) Bereitstellen der Geometrie des Raums (R) durch ein Raum-Modell,
b) Bestimmen einer Menge von möglichen Element-Positionen zur Platzierung der Elemente (E1-E3) aus dem Raum-Modell unter Berücksichtigung von vorbestimmten Platzierungs-Regeln für den Raum (R),
c) Ermitteln der Anzahl an Elementen (E1-E3) für den Raum (R) mithilfe eines Modells auf Basis maschinellen Lernens,
d) Bestimmen einer Menge an Element-Anordnungen mit Permutationen für die Anzahl an Elementen (E1-E3) an den möglichen Element-Positionen, jeweils durch:
d1) Festlegen von Element-Orten an den möglichen Element-Positionen für die ermittelte Anzahl an Elementen (E1-E3) unter Berücksichtigung von vorbestimmten Platzierungs-Regeln für die Elemente (E1-E3) als Element-Anordnung,
d2) Ermitteln eines aggregierten Gesamt-Element-Arbeitsbereichs für den Raum (R) mithilfe der Element-Anordnung und den jeweiligen Element-Arbeitsbereichen,
e) Bestimmen der Element-Anordnung mit dem niedrigsten Verhältnis von Anzahl an Elementen (E1-E3) für den Raum (R) und Gesamt-Element-Arbeitsbereich aus der ermittelten Menge an Element-Anordnungen.

2. Verfahren nach dem vorhergehenden Anspruch, wobei ferner folgender Schritt ausgeführt wird:
f) Platzieren der Elemente (E1-E3) an den Positionen der im Schritt e) bestimmten Element-Anordnung.

3. Verfahren nach einem der vorhergehenden Ansprüche, wobei die Elemente (E1-E3) Sensoren wie Brandmelder sind, und die Elemente vorzugsweise Elemente eines Überwachungssystems sind.

4. Verfahren nach einem der vorhergehenden Ansprüche, wobei die Elemente (E1-E3) Aktuatoren wie Heizungsregler oder aufnehmende Einheiten wie Zuluft-Einheiten oder abgebende Einheiten wie Abluft-Einheiten umfassen.

5. Verfahren nach einem der vorhergehenden Ansprüche, wobei die Elemente Emitter für Löschwasser oder Funk umfassen.

6. Verfahren nach einem der vorhergehenden Ansprüche, wobei das Modell auf Basis maschinellen Lernens mithilfe von Referenz-Räumen mit installierten Referenz-Elementen erzeugt und trainiert wird, und bei welchem Modell jeweils die Geometrie eines Referenz-Raums mit Referent-Elementen und ein entsprechender aggregierter Gesamt-Arbeitsbereich für die Referenz-Elemente berücksichtigt wird.

7. Verfahren nach einem der vorhergehenden Ansprüche, wobei das Modell auf Basis maschinellen Lernens durch einen genetischen Algorithmus bestimmt ist.

8. Verfahren nach einem der vorhergehenden Ansprüche, wobei die vorbestimmten Platzierungs-Regeln für den Raum (R) Mindest-Abstände zu Wänden oder Raum-Öffnungen, oder ein vordefiniertes Positions-Raster für mögliche Element-Positionen im Raum (R) umfassen.

9. Verfahren nach einem der vorhergehenden Ansprüche, wobei die vorbestimmten Platzierungs-Regeln für die Elemente (E1-E3) Höchst-Abstände zwischen einzelnen Elementen (E1-E3) oder bevorzugte Installations-Positionen umfassen.

10. Vorrichtung zur Platzierung von Elementen (E1-E3) in einem Raum (R), wobei die Elemente jeweils (E1-E3) einen Element-Arbeitsbereich aufweisen, und das Verfahren nach einem der vorhergehenden Ansprüche ausgeführt wird.

11. Computerprogramm, umfassend Befehle, welche bei deren Ausführung durch einen Computer diesen veranlassen, das Verfahren nach einem der Ansprüche 1 bis 9 auszuführen.

12. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem der Ansprüche 1 bis 9 durchführen.

13. Datenträgersignal, welches das Computerprogramm nach einem der Ansprüche 1 bis 9 überträgt.
